# EUROPEAN PATENT APPLICATION

(11) **EP 4 410 518 A1**
(43) Date of publication of application: **07.08.2024**
(21) Application number: 22874405.8
(22) Date of filing: 29.07.2022
(51) Int. Cl.: B29C 64/182, B29C 64/393

(54) **METHOD AND APPARATUS FOR DETERMINING 3D MODEL PRINTING POSITION, A DEVICE, AND A STORAGE MEDIUM**

(30) Priority: 30.09.2021 CN 202111162102
(71) Applicant: Shenzhen Creality 3D Technology Co., Ltd., Shenzhen, Guangdong 518110 (CN)
(72) Inventor: AO, Danjun, Shenzhen, Guangdong 518110 (CN); WANG, Jiang, Shenzhen, Guangdong 518110 (CN); HE, Miao, Shenzhen, Guangdong 518110 (CN)
(74) Representative: Zaboliene, Reda
(86) International application number: PCT/CN2022/109078
(87) International publication number: WO 2023/051009

(57) **Abstract**

The present application provides a method and a device for determining a print position of a 3D model, a computer device, and a storage medium. The method includes: obtaining an objective 3D model selected by a user and determining a projection of an objective area including the objective 3D model to a print plane; determining whether storage data exists; determining a first print position of the objective 3D model on the print plane according to the projection when the storage data does not exist; and determining a second print position of the objective 3D model on the print plane according to the projection and the storage data when the storage data exists. No intersection is existed between the second print position and the storage data. The second print position of the objective 3D model can be not the same position as the print positions of the 3D models selected before the objective 3D model, and a problem of reducing a printing accuracy caused by repeated printing at one position on the printing plane can be solved, and realizing an effect of ensuring the print accuracies of models.

## Description

### TECHNICAL FIELD

This application relates to the field of three-dimensional (3D) printing technologies, and specifically, to a method and a device for determining a print position of a 3D model, a computer device, and a computer storage medium.

### BACKGROUND

3D printers are capable of quickly printing out arbitrary complex parts according to data model files, and 3D printing applications are becoming wider and wider due to advantages of wide application range, fast production speed, and intuitive operation.

The current 3D printer is only capable of printing one model at a time in slices, the model is printed in a center, and repeatedly printing at a position on a print plane, which may cause a wear of the print plane, and may further cause a height change of the print plane, reduce a print accuracy, and even cause a print failure.

### SUMMARY

Accordingly, this application provides a method and a device for determining a print position of a three-dimensional (3D) model, a computer device, and a computer storage medium, which is capable of ensuring an effect of print accuracy.

First aspect of this application provides the method for determining the print position of the 3D model, the method includes: obtaining an objective 3D model selected by a user and determining a projection of an objective area including the objective 3D model to a print plane; determining whether storage data exists, the storage data including a print position of a 3D model selected before the objective 3D model on the print plane; determining a first print position of the objective 3D model on the print plane according to the projection when the storage data does not exist; and determining a second print position of the objective 3D model on the print plane according to the projection and the storage data when the storage data exists. No intersection is existed between the second print position and the storage data.

Exemplarily, the method of determining the projection of the objective area including the objective 3D model to the print plane includes: determining the objective area including the objective 3D model according to a bounding box of the objective 3D model and a preset extruder nozzle size; and projecting the objective area to the print plane to obtain the projection.

Exemplarily, the method of determining the second print position of the objective 3D model on the print plane according to the projection and the storage data includes: obtaining a maximum coordinate value xₙ₋₁ in an x-axis direction and a minimum coordinate value yₙ₋₁ in a y-axis direction of a print position of a (n-1)th 3D model when the objective 3D model is a nth 3D model, and n is greater than 1; translating the projection by a distance of xₙ₋₁ from an original point along the x-axis direction, and determining whether a first current position of the projection is out of the print plane; translating the projection by a distance of yₙ₋₁ along the y-axis direction when the first current position of the projection is not out of the print plane, and determining whether a second current position of the projection is out of the print plane; and setting the second current position of the projection as the second print position of the nth 3D model on the print plane when the second current position of the projection is not out of the print plane.

Exemplarily, after determining whether the first current position of the projection is out of the print plane, the method further includes: obtaining a maximum coordinate value yₙ₋₁' in the y-axis direction of the print position of the (n-1)th 3D model when the first current position of the projection is out of the print plane; translating the projection by a distance of yₙ₋₁' from the original point along the y-axis direction and determining whether a third current position of the projection is out of the print plane again; and setting the third current position of the projection as the second print position of the nth 3D model on the print plane when the third current position of the projection is not out of the print plane.

Exemplarily, after determining whether the first current position of the projection is out of the print plane, the method further includes: obtaining a maximum coordinate value yₘₐₓ in the y-axis direction of the print position among previous (n-1) 3D models when the first current position of the projection is out of the print plane; translating the projection by a distance of yₘₐₓ from the original point along the y-axis direction and determining whether a fourth current position of the projection is out of the print plane again; and setting the fourth current position of the projection as the second print position of the nth 3D model on the print plane when the fourth current position of the projection is not out of the print plane.

Exemplarily, after determining whether the third current position of the projection is out of the print plane again or determining whether the fourth current position of the projection is out of the print plane again, the method further includes: canceling the second print position of the nth 3D model and returning a prompt message when the third current position of the projection is out of the print plane or the fourth current position of the projection is out of the print plane.

Exemplarily, the method of determining the first print position of the objective 3D model on the print plane according to the projection includes: determining the first print position of the objective 3D model on the print plane after a vertex of the projection is superposed with an original point of the print plane, and two boundary lines of the projection are respectively superposed with an x-axis and a y-axis of the print plane.

Second aspect of this application provides a device for determining the print position of the 3D model, the device includes: a model obtaining module configured to obtain an objective 3D model selected by a user and determine a projection of an objective area including the objective 3D model to a print plane; a storage data determining module configured to determine whether storage data exists, the storage data including a print position of a 3D model selected before the objective 3D model on the print plane; a first print position determining module configured to determine a first print position of the objective 3D model on the print plane according to the projection when the storage data does not exist; and a second print position determining module configured to determine a second print position of the objective 3D model on the print plane according to the projection and the storage data when the storage data exists. No intersection is existed between the second print position and the storage data.

Third aspect of this application provides a computer device, the computer device includes: one or more processors; and a storage device configured to store one or more programs. When the one or more programs run on the one or more processors, to cause the one or more processors to execute the above-mentioned method for determining the print position of the 3D model.

Fourth aspect of this application provides a computer storage medium, the computer storage medium stores computer programs, when the computer programs run on a processor, the processor is caused to execute the above-mentioned method for determining the print position of the 3D model.

This application obtains the objective 3D model selected by the user, determines the projection of the objective area including the objective 3D model to the print plane, and determines whether the storage data exists. The storage data includes the print position of the 3D model selected before the objective 3D model on the print plane. The application further determines the first print position of the objective 3D model on the print plane according to the projection when the storage data does not exist, and determines the second print position of the objective 3D model on the print plane according to the projection and the storage data when the storage data exists. No intersection is existed between the second print position and the storage data. Thus, the second print position of the objective 3D model and the print position of the 3D model selected before the objective 3D model are not the same position, a problem of reducing the printing accuracy caused by repeated printing at one position on the printing plane can be solved, and realizing the effect of ensuring the print accuracies of models.

### BRIEF DESCRIPTION OF DRAWINGS

FIG. 1A is a flowchart of a method for determining a print position of a three-dimensional (3D) model according to an embodiment of the present application;
FIG. 1B is a sub flowchart of the method for determining the print position of the 3D model according to an embodiment of the present application;
FIG. 1C is a sub flowchart of the method for determining the print position of the 3D model according to another embodiment of the present application;
FIG. 2 is a schematic diagram of a print plane of the method for determining the print position of the 3D model according to an embodiment of the present application;
FIG. 3 is a schematic diagram of the print plane of the method for determining the print position of the 3D model according to another embodiment of the present application;
FIG. 4 is a schematic diagram of the print plane of the method for determining the print position of the 3D model according to another embodiment of the present application;
FIG. 5 is a schematic diagram of the print plane of the method for determining the print position of the 3D model according to another embodiment of the present application;
FIG. 6 is a schematic diagram of the print plane of the method for determining the print position of the 3D model according to another embodiment of the present application;
FIG. 7 is a schematic diagram of the print plane of the method for determining the print position of the 3D model according to another embodiment of the present application;
FIG. 8 is a schematic structural diagram of a device for determining the print position of the 3D model according to an embodiment of the present application;
FIG. 9 is a schematic structural diagram of a computer device according to an embodiment of the present application.

### DESCRIPTION OF EMBODIMENTS

The present application is described in detail below in conjunction with the drawings and the description of embodiments. It is understood that, the described embodiments herein are only for the interpretation of the present application and are not for the limitation of the present application. It should also be noted that, for the sake of description, only part of but not all of the structures related to the present application are shown in the drawings.

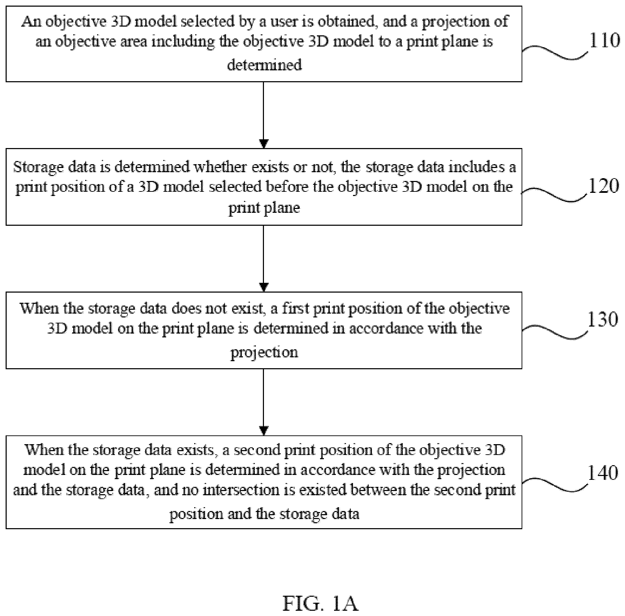

FIG. 1A is a flowchart of a method for determining a print position of a three-dimensional (3D) model according to an embodiment of the present application. The present embodiment is suitable for a single-model print mode of printing one 3D model at a time, and is also suitable for a multi-model print mode of printing a plurality of 3D models selected by a user at a time, and the method can be performed by a device for determining the print position of the 3D model, as shown in FIG. 1A, the method includes the following blocks.

In block 110, an objective 3D model selected by a user is obtained, and a projection of an objective area including the objective 3D model to a print plane is determined.

The objective area including the objective 3D model can be determined according to a bounding box of the objective 3D model, and the objective area can be projected to the print plane to obtain the projection of the objective area. The print plane can be a projection of a space formed by a build platform in a slicing software.

Exemplarily, block 110 may further include block 111 and block 112.

In block 111, the objective area including the objective 3D model is determined according to the bounding box of the objective 3D model and a preset extruder nozzle size.

In block 112, the objective area is projected to the print plane to obtain the projection of the objective area.

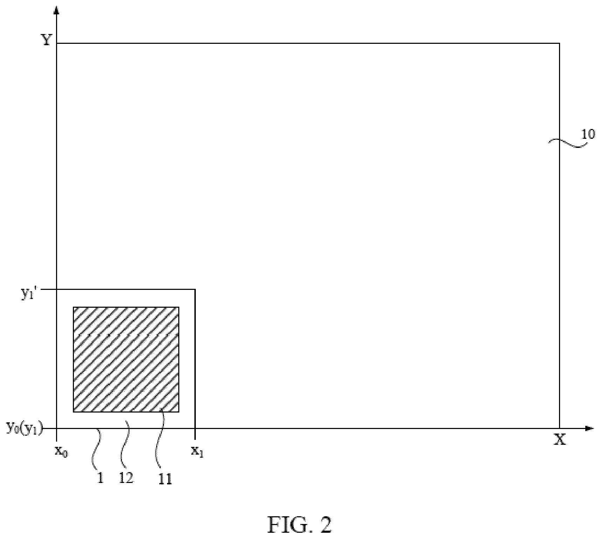

The objective 3D model selected by the user can be obtain, and the projection of the objective area of the objective 3D model to the print plane cane be determined according to data of the objective 3D model. As shown in FIG. 2, the objective area is formed by the bounding box 11 of the objective 3D model and the preset extruder nozzle size 12. The objective area can be obtained through a size of the bounding box 11 of the objective 3D model expanding outwards by the extruder nozzle size 12. The print plane can be a x-y plane that the build platform is projected in the slicing software. The objective area corresponding to the objective 3D model is projected on the print plane to obtain the projection 1 of the objective area, and projection data of the objective 3D model can be saved.

The size of the bounding box of the objective 3D model is expanded outwards by the extruder nozzle size to determine the target area of the target 3D model, the objective 3D model can be avoided from contacting with other 3D models during model printing, and a printing safety of the objective 3D model can be ensured.

In block 120, storage data is determined whether exists or not, the storage data includes a print position of a 3D model selected before the objective 3D model on the print plane.

Block 130 and block 140 can be respectively performed according to a determined result of block 120.

When the user selects the single-model print mode of printing one 3D model at a time, the objective 3D model selected by the user is a unique model data, and the print position of the objective 3D model can be any one of eligible areas on the print plane. When the user selects the multi-model print mode of printing a plurality of 3D models at a time, some areas on the print plane may have been set to print positions of other 3D models during the user selecting the objective 3D model, and the print positions of the plurality of 3D models selected by the user on the printing plane needs to be determined sequentially according to a order in which the user selects the 3D models or a order in which the system automatically arranges. It is necessary to determine whether the storage data exists, the storage data includes the print positions of the 3D models selected before the objective 3D model, and the print positions of the 3D models can be saved in a form of coordinates.

The print plane and the extruder nozzle size can be determined according to a model of a printer selected by the user. As shown in FIG. 2, when the user selects the model of the printer, a length, a width, and a height of the print area can be obtained. The length, the width, and the height of the print area are X*Y*Z. A length and a width of the print plane are X*Y, and the extruder nozzle size of the printer is Δx*Δy*Δz. For example, if a model of Ender 3 is selected in this embodiment, the print area of the model of Ender 3 can be obtained with a length, a width and a height of 300mm*300mm*400mm.

By determining whether the storage data exists, the print mode selected by the user can be determined, and the print position of the objective 3D model on the printing plane can be quickly determined.

In block 130, when the storage data does not exist, a first print position of the objective 3D model on the print plane is determined according to the projection.

When the user selects the single-model print mode, the storage data does not exist. When the user selects the multi-model print mode and the objective 3D model selected by the user is the first 3D model in the plurality of 3D models, the storage data also does not exist. Any area on the print plane can be selected as the first print position of the objective 3D model according to the projection of the objective 3D model.

Exemplarily, when a vertex of the projection is superposed with an original point of the print plane, and two boundary lines of the projection are respectively superposed with an x-axis and a y-axis of the print plane, the first print position of the objective 3D model can be determined.

As shown in FIG. 2, the vertex of the projection of the objective 3D model one the print plane is superposed with the original point of the print plane, and the two boundary lines of the projection are respectively superposed with the x-axis and the y-axis of the print plane, the first print position of the objective 3D model can be determined. The print positions of other 3D models can be sequentially determined according to the same manner. If the user selects the multi-model print mode, the print plane can be fully utilized, the number of print models at the same time and the print efficiency of model can be improved.

Exemplarily, after the first print position of the objective 3D model is determined, a maximum coordinate value xₙ in an x-axis direction, a minimum coordinate value yₙ in a y-axis direction, and a maximum coordinate value yₙ' in the y-axis direction of the first print position are recorded, and the first print position can be saved in a form of coordinates.

In block 140, when the storage data exists, a second print position of the objective 3D model on the print plane is determined according to the projection and the storage data, and no intersection is existed between the second print position and the storage data.

When the user selects the multi-model print mode and the objective 3D model selected by the user is not the first 3D model in the plurality of 3D models, the second print position of the objective 3D model on the print plane needs to be determined according to the projection of the objective 3D model on the print plane and print positions of previously selected 3D models on the printing plane, and the second print position is not intersected with the storage data. That is, the second print position of the objective 3D model on the print plane does not superpose with the print positions of the previously selected 3D models.

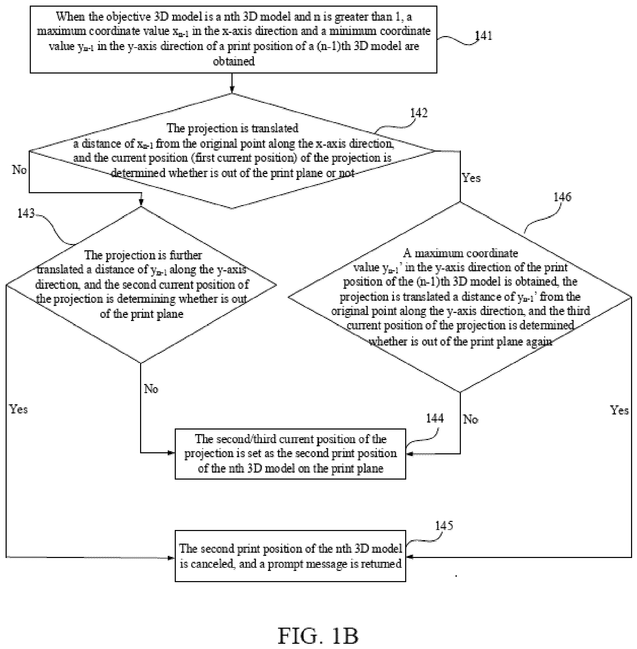

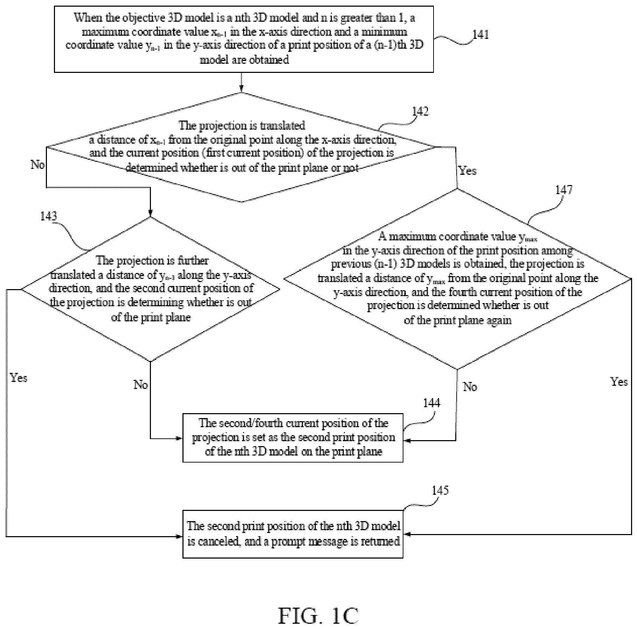

Exemplarily, as shown in FIG. 1B and FIG. 1C, block 140 may further include the following blocks:

In block 141, when the objective 3D model is a nth 3D model and n is greater than 1, a maximum coordinate value xₙ₋₁ in the x-axis direction and a minimum coordinate value yₙ₋₁ in the y-axis direction of a print position of a (n-1)th 3D model are obtained.

In block 142, the projection is translated a distance of xₙ₋₁ from the original point along the x-axis direction, and the current position (first current position) of the projection is determined whether is out of the print plane or not.

Block 143, block 146, or block 147 is performed according to a determined result of block 142. If the determined result is no, proceed to block 143. If the determined result is yes, proceed to block 146 or block 147.

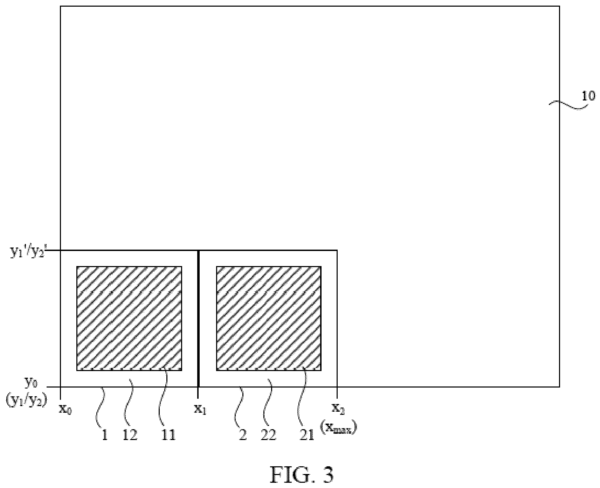

As shown in FIG. 3, when the print positions of the plurality of 3D models are determined, the prints position are preferentially set along the x-axis direction on the print plane. When the objective 3D model selected by the user is the nth 3D model, data of the print position of the previous 3D model ((n-1)th 3D model) is obtained. That is, the maximum coordinate value xₙ₋₁ of the print position of the (n-1) 3D model in the x-axis direction and the minimum coordinate value yₙ₋₁ in the y-axis direction are obtained.

For example, if n=2, as shown in FIG. 3, firstly, the vertex of the projection 2 of the objective 3D model in the print plane is superposed with the original point x₀ of the print plane, and the two boundary lines of the projection 2 are respectively superposed with the x-axis and the y-axis of the print plane. Secondly, the projection is translated a distance of x₁ from the original point xo of the print plane along the x-axis direction. In order to ensure that the print positions are all on the print plane, after the translation is completed, it is necessary to determine whether the current position of the projection is out of an edge of the print plane in the x-axis.

In block 143, the projection is further translated a distance of yₙ₋₁ along the y-axis direction, and the current position (second current position) of the projection is determining whether is out of the print plane.

Block 144 or block 145 is performed according to a determined result of block 143. If the determined result is yes, proceed to block 145. If the determined result is no, proceed to block 144.

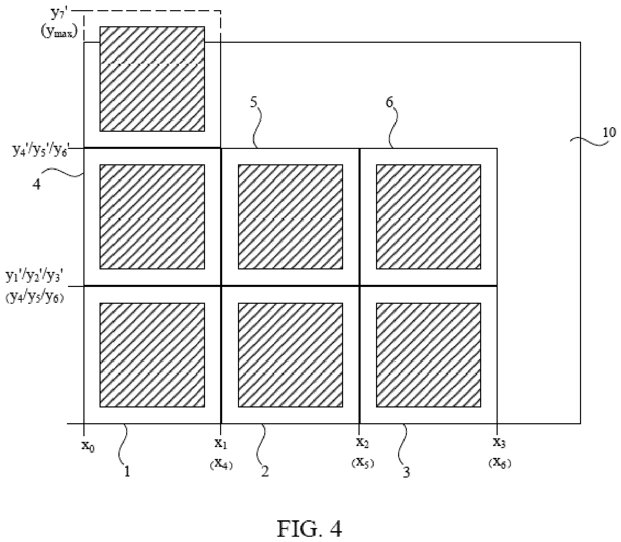

If the first current position of the projection is not out of the print plane, the print position can be adjusted in the y-axis. For example, the first current position of the projection is translated the distance of yₙ₋₁ along the y-axis direction. For example, if n=5, as shown in FIG. 4, the projection 5 of the objective 3D model is translated a distance of x₄ from the original point x₀ of the print plane 10 along the x-axis direction, and the current position of the projection is further translated a distance of y₄ along the y-axis direction. In order to ensure that the print positions are all on the print plane, after the translation is completed, it is necessary to determine whether the current position (second current position) of the projection is out of an edge of the print plane in the y-axis.

In block 144, the second current position of the projection is set as the second print position of the nth 3D model on the print plane.

If the second current position of the projection is not out of the print plane, the second current position of the projection meets a print requirement of the nth 3D model, and the second current position of the projection can be set as the second print position of the nth 3D model. For example, if n=5, as shown in FIG. 4, a position of the current projection 5 is not out of the print plane, and the position of the current projection 5 is set as the second print position of the fifth 3D model.

In block 145, the second print position of the nth 3D model is canceled, and a prompt message is returned.

If the second current position of the projection is out of the print plane, although the second current position of the projection belongs to the print plane in the x-axis direction, the second current position of the projection is out of the edge of the print plane in the y-axis direction. The determination of print position is preferentially set along the x-axis direction, the second current position of the projection can not meet the print requirement by adjusting the second current position of the projection at this moment, and the print positions of the 3D models arranged on the print plane have reached an upper limit. For example, if n=7, as shown in FIG. 4, the current position of the projection belongs to the print plane in the x-axis direction, while the current position of the projection is out of the edge of the print plane in the y-axis direction, and a 3D model cannot be added. Therefore, the second print position of the nth 3D model is canceled, and the prompt message is returned to remind the user that no 3D model can be added.

In block 146, a maximum coordinate value yₙ₋₁' in the y-axis direction of the print position of the (n-1)th 3D model is obtained, the projection is translated a distance of yₙ₋₁' from the original point along the y-axis direction, and the current position (third current position) of the projection is determined whether is out of the print plane again.

Block 144 or block 145 is performed according to a determined result of block 146. If the determined result is no, proceed to block 144. If the determined result is yes, proceed to block 145.

In block 147, a maximum coordinate value yₘₐₓ in the y-axis direction of the print position among previous (n-1) 3D models is obtained, the projection is translated a distance of yₘₐₓ from the original point along the y-axis direction, and the current position (fourth current position) of the projection is determined whether is out of the print plane again.

Block 144 or block 145 is performed according to a determined result of block 147. If the determined result is no, proceed to block 144. If the determined result is yes, proceed to block 145.

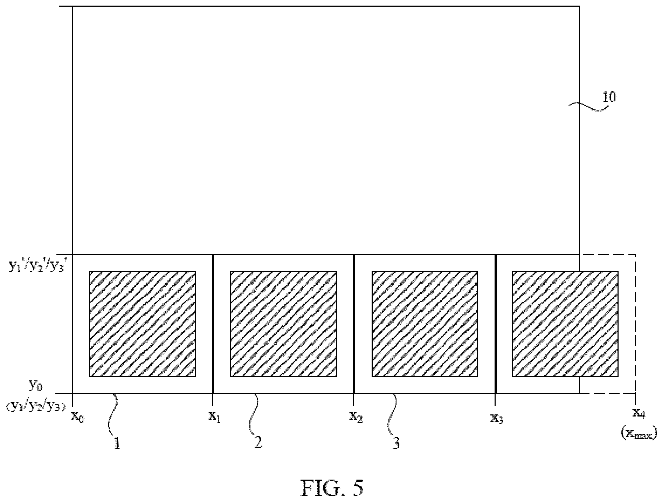

As shown in FIG. 5, if the current position (first current position) of the projection is out of the print plane in the x-axis direction, the current position on the print plane cannot meet a print setting of the 3D model, it is necessary to adjust the first current position of the projection in the x-axis direction, and further set the print position of the 3D model in the y-axis direction.

There are two adjustment manners for adjusting first current position of the projection in the x-axis direction. The first adjustment manner is shown in block 146, the first adjustment manner may includes: obtaining the maximum coordinate value yₙ₋₁' in the y-axis direction of the print position of the (n-1)th 3D model, and translating the projection by the distance of yₙ₋₁' from the original point along the y-axis direction. That is, the minimum value of the projection of the objective 3D model in the y-axis direction is determined according to the maximum value of the print position of the previous 3D model in the y-axis direction, to ensure that the projection of the objective 3D model and a 3D model arranged in the same row of the previous 3D model do not intersect in the y-axis direction.

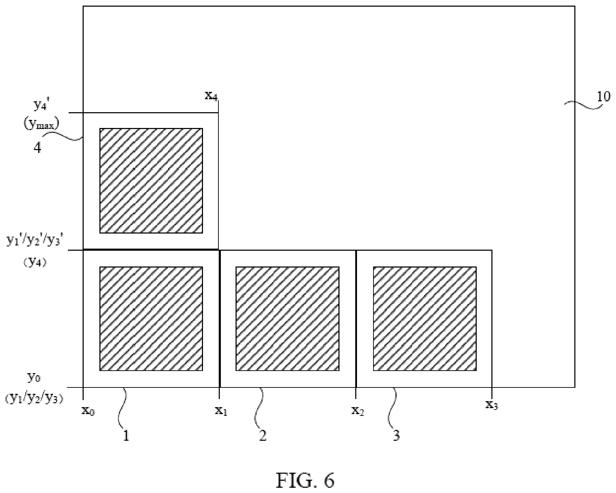

For example, as shown in FIG. 6, if n=4, a maximum coordinate value y₃' of the print position of the third 3D model in the y-axis direction is obtained, and the projection is translated by a distance of ys' from the original point in the y-axis direction to obtain the current projection 4. At this moment, the current projection 4 is not out of the edge of the print plane in the x-axis direction. In order to ensure that the print positions are all on the print plane, after the translation is completed, a position of the current projection 4 is determined whether is out of the print plane. That is, the position of the current projection 4 is determined whether is out of the edge of the print plane in the y-axis direction. If the determined result is no, as shown in FIG. 5, the position of the current projection 4 is set as the second print position of the fourth 3D model. If the determined result is yes, as shown in FIG. 4, if n=7, the position of the current projection 4 is out of the edge of the print plane in the y-axis direction, a second print position of a seventh 3D model is canceled and the prompt message is returned. The first adjustment manner is suitable for printing a plurality of 3D models with the same size at a time.

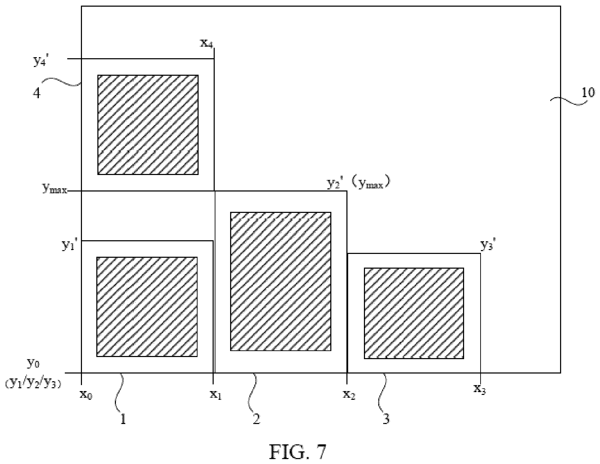

The second adjustment manner is shown in block 147, the second adjustment manner may includes: obtaining the maximum coordinate value xₙ in the x-axis direction of the projection of the nth 3D model, searching the maximum coordinate value yₘₐₓ corresponding to the maximum coordinate value xₙ in the storage data, and translating the projection by the distance of yₘₐₓ from the original point along the y-axis direction. Because of the maximum coordinate value xₙ of the current projection in the x-axis direction is out of the print plane, as shown in FIG. 7, the maximum coordinate value yₘₐₓ corresponding to the maximum coordinate value xₙ can be searched in the storage data. That is, the maximum coordinate value yₘₐₓ is the maximum value of the print position of all previous 3D models in the y-axis direction. The projection is translated by the distance of yₘₐₓ from the original point along the y-axis direction, to ensure that the projection 4 of the objective 3D model and each 3D model in the storage data do not have an intersection in the y-axis direction. At this moment, the projection 4 is not out of the edge of the print plane in the x-axis direction. In order to ensure that the print positions are all on the print plane, after the translation is completed, a position of the current projection is determined whether is out of the print plane. That is, the position of the current projection is determined whether is out of the edge of the print plane in the y-axis direction. If the determined result is no, the position of the current projection is set as the second print position of the nth 3D model. If the determined result is yes, the second print position of the nth 3D model is canceled and the prompt message is returned. The second adjustment manner is suitable for printing a plurality of 3D models with different sizes at a time.

The prompt message can remind the user that no 3D model can be added, or remind the user that it needs to be printed in multiple prints, or the printer can directly start printing the 3D model with a determined print position according to the returned prompt message.

The embodiments of the method describe: obtaining the objective 3D model selected by the user and determining the projection of the objective area including the objective 3D model to the print plane; determining whether the storage data exists, the storage data including the print positions of the 3D models selected before the objective 3D model; determining the first print position of the objective 3D model according to the projection when the storage data does not exist; determining the second print position of the objective 3D model according to the projection and the storage data when the storage data exists. No intersection is existed between the second print position and the storage data. In this way, the second print position of the objective 3D model is not the same position as the print positions of the 3D models selected before the objective 3D model, and a problem of reducing a printing accuracy caused by repeated printing at one position on the printing plane can be solved, and realizing an effect of ensuring the print accuracies of models.

Exemplarily, a clear instruction may be received, and the data of the 3D model on the printing plane can be cleaned and the printing plane can be initialized according to the clear instruction.

After a print is completed and all printed 3D models have been removed, the user can input the clear instruction through a clear button, and the 3D printer can receive the clear instruction and clear the data of the 3D model on the printing plane. The 3D printer can further receive a plurality of 3D models selected by the user, rearrange the plurality of 3D models, determine the print position of each of the plurality of 3D models, and print the plurality of 3D models.

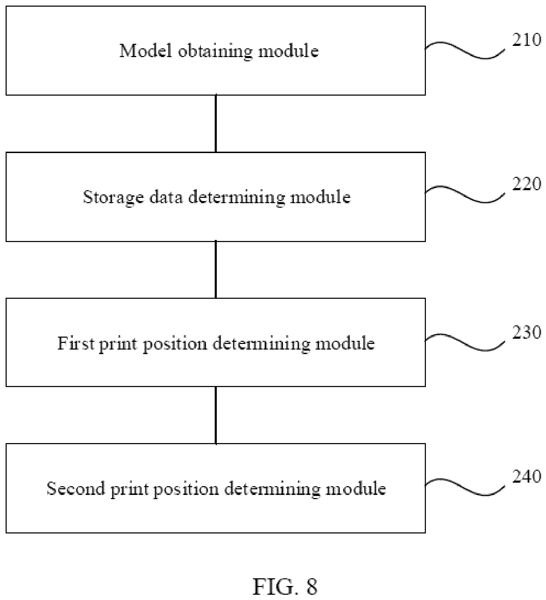

FIG. 8 is a schematic structural diagram of a device for determining the print position of the 3D model according to an embodiment of the present application. As shown in FIG. 8, the device for determining the print position of the 3D model includes a model obtaining module 210, a storage data determining module 220, a first print position determining module 230, and a second print position determining module 240.

The model obtaining module 210 is configured to obtain the objective 3D model selected by the user and determine the projection of the objective area including the objective 3D model to the print plane.

The storage data determining module 220 is configured to determine whether the storage data exists. The storage data includes the print positions of the 3D models selected before the objective 3D model on the print plane, and the print plane can be determined according to the model of the printer selected by the user.

The first print position determining module 230 is configured to determine the first print position of the objective 3D model on the print plane according to the projection in response to the storage data not exist.

The second print position determining module 240 is configured to determine the second print position of the objective 3D model on the print plane according to the projection and the storage data in response to the storage data existing. No intersection is existed between the second print position and the storage data.

The embodiment of the device describes: obtaining the objective 3D model selected by the user and determining the projection of the objective area including the objective 3D model to the print plane; determining whether the storage data exists, the storage data including the print positions of the 3D models selected before the objective 3D model; determining the first print position of the objective 3D model according to the projection when the storage data does not exist; determining the second print position of the objective 3D model according to the projection and the storage data when the storage data exists. No intersection is existed between the second print position and the storage data. In this way, the second print position of the objective 3D model is not the same position as the print positions of the 3D models selected before the objective 3D model, and the problem of reducing the printing accuracy caused by repeated printing at one position on the printing plane can be solved, and realizing the effect of ensuring the print accuracies of models.

Exemplarily, the model obtaining module 210 may include an objective area obtaining unit and a projection determining unit. The objective area obtaining unit is configured to determine the objective area including the objective 3D model according to the bounding box of the objective 3D model and the preset extruder nozzle size. The projection determining unit is configured to project the objective area to the print plane to obtain the projection of the objective area.

Exemplarily, the second print position determining module 240 may include a coordinate obtaining unit, a first horizontal move determining unit, a first vertical move determining unit, a second print position determining unit, a canceling unit, a second move determining unit, a third move determining unit.

The coordinate obtaining unit is configured to obtain the maximum coordinate value xₙ₋₁ in the x-axis direction and the minimum coordinate value yₙ₋₁ in the y-axis direction of the print position of the (n-1)th 3D model in response to the objective 3D model being the nth 3D model, n is greater than 1.

The first horizontal move determining unit is configured to translate the projection by the distance of xₙ₋₁ from the original point along the x-axis direction and determine whether the first current position of the projection is out of the print plane.

The first vertical move determining unit is configured to translate the projection by the distance of yₙ₋₁ along the y-axis direction in response to the first current position of the projection being not out of the print plane, and the first vertical move determining unit is further configured to determine whether the second current position of the projection is out of the print plane.

The second print position determining unit is configured to set the second current position/the third current position/the fourth current position of the projection as the second print position of the nth 3D model in response to the second current position/the third current position/the fourth current position of the projection being not out of the print plane.

The canceling unit is configured to cancel the second print position of the nth 3D model and return the prompt message in response to the second current position/the third current position/the fourth current position of the projection being out of the print plane.

The second move determining unit is configured to obtain the maximum coordinate value yₙ₋₁' in the y-axis direction of the print position of the (n-1)th 3D model in response to the first current position of the projection being out of the print plane. The second move determining unit is further configured to translate the projection by the distance of yₙ₋₁' from the original point along the y-axis direction and determine whether the third current position of the projection is out of the print plane again.

The third move determining unit is configured to obtain the maximum coordinate value yₘₐₓ in the y-axis direction of the print position among the previous (n-1) 3D models in response to the first current position of the projection being out of the print plane. The third move determining unit is further configured to translate the projection by the distance of yₘₐₓ from the original point along the y-axis direction and determine whether the fourth current position of the projection is out of the print plane again.

The device for determining the print position of the 3D model provided in the embodiment of the present application can perform the method for determining the print position of the 3D model provided in above-mentioned embodiments of the present application, and the device has the corresponding functional modules and the corresponding beneficial effect of the method

FIG. 9 is a schematic structural diagram of a computer device according to an embodiment of the present application. As shown in FIG. 9, the computer device may include a processor 300, a data storage 310, an input device 320, and an output device 330; the device for determining the print position of the 3D model may include one or more processors 300, FIG. 9 only shows one processor 300 as an example; the processor 300, the data storage 310, the input device 320, and the output device 330 of the computer device can be connected by buses or other manners, and FIG. 9 shows communication buses as an example.

The data storage 310 is a kind of computer-readable storage medium, which can be used to store software programs, computer-executable programs, and modules, such as program instructions/modules corresponding to the method for determining the print position of the 3D model in the embodiments of the present application (for example, the model obtaining module 210, the storage data determining module 220, the first print position determining module 230, and the second print position determining module 240 of the device for determining the print position of the 3D model). The processor 300 can run the software program, instruction, and module stored in the data storage 310 to execute functional applications and data processing in the device, i.e., to execute the above-mentioned method for determining the print position of the 3D model.

The data storage 310 may include a storage program area and a storage data area. The storage program area can store an operating system, at least one application required for a function. The storage data area can store data created in a use of the device. In addition, the data storage 310 may include high-speed random access memory, non-volatile memory, such as at least one disk storage device, flash memory device, or other non-volatile solid-state memory device. In some embodiments, the data storage 310 may further include memory that is set remotely relative to the processor 300, which can be accessed to the device via a network. The network may include, but not limited to, the Internet, intranet, local area network, mobile communication network, and combinations thereof.

The input device 320 can be configured to receive numeric or character information, and generate key signal input related to user setting and function control of the device. The output device 330 may include display devices, such as display screens.

The present application further provides a computer storage medium, the computer storage medium stores computer instructions, when the computer instructions run on a processor, the processor is caused to execute the method for determining the print position of the 3D model. The method includes: obtaining the objective 3D model selected by the user and determining the projection of the objective area including the objective 3D model to the print plane; determining whether the storage data exists, the storage data including the print positions of the 3D models selected before the objective 3D model on the print plane; determining the first print position of the objective 3D model on the print plane according to the projection when the storage data does not exist; and determining the second print position of the objective 3D model on the print plane according to the projection and the storage data when the storage data exists. No intersection is existed between the second print position and the storage data.

Exemplarily, the embodiment of the present application provides the computer storage medium storing computer instructions, and the computer instructions is not limited to execute the method described in the previous paragraph. When the computer programs run on the processor, the processor is further caused to execute the method provided in any embodiment of the present application.

From the above description of embodiments, it is clear to the skilled in the art that the present application can be realized with a help of software and necessary general hardware, and it can also be implemented by hardware, but in many cases the former is the exemplary embodiment. Based on this understanding, the part of the solution of the present application that contributes to the prior art may be shown in a form of a software product, which can be stored in a computer-readable storage medium, such as a computer floppy disk, read-only memory (ROM), random access memory (RAM), flash memory, a hard disk or a compact disc, etc., including instructions for enabling a computer device (which may be a personal computer, a server, or a network device, etc.) to perform the method described in any embodiment of the present application.

In addition, the units and modules included in the device for determining the print position of the 3D model described in above embodiment are only divided according to functional logics, but are not limited to the above-mentioned division, the premise of the division is that the corresponding function can be achieved. The names of the functional units are only for distinguishing themselves and are not intended to limit the scope of protection of the present application.

It should be noted that the above description is only refer to exemplary embodiments and technical principles of the present application. The skilled in the art would understand that the present application is not limited to the above embodiments described herein, and that it is capable of various changes, readjustments, and substitutions for the skilled in the art without departing from the scope of protection of the present application. Although the present application is described in more detail through the above embodiments, the present application is not limited to the above embodiments, but can also include more other equivalent embodiments without departing from the conception of the present application, and the scope of the present application is determined by the scope of the attached claims.

## Claims

1. A method for determining a print position of a three-dimensional (3D) model, **characterized in that**, the method comprises:
obtaining an objective 3D model selected by a user and determining a projection of an objective area comprising the objective 3D model to a print plane;
determining whether storage data exists, the storage data comprising a print position of a 3D model selected before the objective 3D model on the print plane;
determining a first print position of the objective 3D model on the print plane according to the projection when the storage data does not exist; and
determining a second print position of the objective 3D model on the print plane according to the projection and the storage data when the storage data exists, wherein no intersection is existed between the second print position and the storage data.

2. The method as claimed in claim 1, **characterized in that**, the method of determining the projection of the objective area comprising the objective 3D model to the print plane comprises:
determining the objective area comprising the objective 3D model according to a bounding box of the objective 3D model and a preset extruder nozzle size; and
projecting the objective area to the print plane to obtain the projection.

3. The method as claimed in claim 1, **characterized in that**, the method of determining the second print position of the objective 3D model on the print plane according to the projection and the storage data comprises:
obtaining a maximum coordinate value xₙ₋₁ in an x-axis direction and a minimum coordinate value yₙ₋₁ in a y-axis direction of a print position of a (n-1)th 3D model when the objective 3D model is a nth 3D model, and n is greater than 1;
translating the projection by a distance of xₙ₋₁ from an original point along the x-axis direction, and determining whether a first current position of the projection is out of the print plane;
translating the projection by a distance of yₙ₋₁ along the y-axis direction when the first current position of the projection is not out of the print plane, and determining whether a second current position of the projection is out of the print plane; and
setting the second current position of the projection as the second print position of the nth 3D model on the print plane when the second current position of the projection is not out of the print plane.

4. The method as claimed in claim 3, **characterized in that**, after determining whether the first current position of the projection is out of the print plane, the method further comprises:
obtaining a maximum coordinate value yₙ₋₁' in the y-axis direction of the print position of the (n-1)th 3D model when the first current position of the projection is out of the print plane;
translating the projection by a distance of yₙ₋₁' from the original point along the y-axis direction and determining whether a third current position of the projection is out of the print plane again; and
setting the third current position of the projection as the second print position of the nth 3D model on the print plane when the third current position of the projection is not out of the print plane.

5. The method as claimed in claim 3, **characterized in that**, after determining whether the first current position of the projection is out of the print plane, the method further comprises:
obtaining a maximum coordinate value yₘₐₓ in the y-axis direction of the print position among previous (n-1) 3D models when the first current position of the projection is out of the print plane;
translating the projection by a distance of yₘₐₓ from the original point along the y-axis direction and determining whether a fourth current position of the projection is out of the print plane again; and
setting the fourth current position of the projection as the second print position of the nth 3D model on the print plane when the fourth current position of the projection is not out of the print plane.

6. The method as claimed in claim 4 or claim 5, **characterized in that**, after determining whether the third current position of the projection is out of the print plane again or determining whether the fourth current position of the projection is out of the print plane again, the method further comprises:
canceling the second print position of the nth 3D model and returning a prompt message when the third current position of the projection is out of the print plane or the fourth current position of the projection is out of the print plane.

7. The method as claimed in claim 1, **characterized in that**, the method of determining the first print position of the objective 3D model on the print plane according to the projection comprises:
determining the first print position of the objective 3D model on the print plane after a vertex of the projection is superposed with an original point of the print plane, and two boundary lines of the projection are respectively superposed with an x-axis and a y-axis of the print plane.

8. A device for determining a print position of a three-dimensional (3D) model, **characterized in that**, the device comprises:
a model obtaining module, configured to obtain an objective 3D model selected by a user and determine a projection of an objective area comprising the objective 3D model to a print plane;
a storage data determining module, configured to determine whether storage data exists, the storage data comprising a print position of a 3D model selected before the objective 3D model on the print plane;
a first print position determining module, configured to determine a first print position of the objective 3D model on the print plane according to the projection when the storage data does not exist; and
a second print position determining module, configured to determine a second print position of the objective 3D model on the print plane according to the projection and the storage data when the storage data exists, wherein no intersection is existed between the second print position and the storage data.

9. A computer device, **characterized in that**, the computer device comprises:
one or more processors; and
a storage device, configured to store one or more programs, when the one or more programs run on the one or more processors, to cause the one or more processors to execute a method for determining a print position of a three-dimensional (3D) model according to any one of claims 1 to 7.

10. A computer storage medium, the computer storage medium storing computer programs, **characterized in that**, when the computer programs run on a processor, the processor is caused to execute a method for determining a print position of a three-dimensional (3D) model according to any one of claims 1 to 7.
